Europäisches Patentamt

European Patent Office

Office européen des brevets

(19)

(11) Veröffentlichungsnummer: **0 098 238**
**B1**

(12) **EUROPÄISCHE PATENTSCHRIFT**

(45) Veröffentlichungstag der Patentschrift:
10.01.90

(21) Anmeldenummer: 83810192.1

(22) Anmeldetag: 06.05.83

(51) Int. Cl.⁴: **G 01 D 5/22**, G 01 B 7/02

(54) Induktive Messanordnung bzw. Sensoranordnung und Verwendung derselben.

Teilanmeldung 87117425 eingereicht am 05.03.88.

(30) Priorität: 13.05.82 CH 3000/82

(43) Veröffentlichungstag der Anmeldung:
11.01.84 Patentblatt 84/2

(45) Bekanntmachung des Hinweises auf die Patenterteilung:
10.01.90 Patentblatt 90/2

(84) Benannte Vertragsstaaten:
AT CH DE FR GB IT LI SE

(56) Entgegenhaltungen:
EP-A- 0 016 638
DE-A- 2 928 899
GB-A- 2 085 594
US-A- 4 015 101

(73) Patentinhaber: C.A. Weidmüller GmbH & Co.,
Klingenbergstrasse 16, D-4930 Detmold (DE)

(72) Erfinder: Schmall, Karl-Heinz, Waldstrasse 20,
D-7570 Baden-Baden 19 (DE)

(74) Vertreter: Hepp, Dieter et al, HEPP & Partner AG
Marktgasse 18, CH-9500 Wil (CH)

## Beschreibung

Die Erfindung betrifft eine induktive Sensoranordnung gemäß Oberbegriff von Patentanspruch 1 sowie eine Meßanordnung gemäß Oberbegriff von Patentanspruch 10. Die aus der vorliegenden Anmeldung hervorgegangene Teilanmeldung Nr. 87 117 425.6 betrifft dagegen eine Meßanordnung unter Verwendung induktiver Sensoren, bei der in erster Linie die Phasenverschiebung zwischen Sender-Spule und Empfänger-Spule zur Meßwertermittlung ausgewertet wird.

Sensoranordnungen zur Ermittlung der Relativlage von Werkzeugen in bezug auf ein zu bearbeitendes Werkstück sind insbesondere als Höhensteuerungen kapazitiver oder induktiver Bauart seit langem bekannt und gebräuchlich. Derartige Sensoranordnungen sind z.B. in den DE-OS 2 726 648, 2 747 539 und 2 829 851 beschrieben.

Bei induktiven Anordnungen ist in der Regel am Werkzeug eine Spule vorgesehen, die als frequenzbestimmendes oder mit-frequenzbestimmendes Glied eines Schwingkreises ausgebildet ist, wobei durch die Abstandsänderung zwischen Spule und Werkstück eine unterschiedliche Dämpfung und Induktivitätsänderung der Spule und damit des Schwingkreises bewirkt wird.

Derartige Sensoranordnungen eignen sich lediglich zur Abstandsmessung über flächigen Objekten und sind z.B. nicht verwendbar, wenn es darum geht, in der Nähe von Objektkanten, bei Objekten mit unregelmäßiger Oberfläche oder im Fall von Objekten mit Schlitzen oder anderen Unterbrechungen ohne Störung durch diese Unregelmäßigkeiten den Abstand konstant zu ermitteln oder sogar den Unregelmäßigkeiten, z.B. den Spalten, zu folgen. Ersichtlicherweise wird nämlich durch eine derartige Unregelmäßigkeit, wie z.B. eine Spalte, die Induktivität in gleicher Weise beeinflußt, wie es dann der Fall wäre, wenn sich die Spule weiter vom Werkstück entfernte. Die Signale lassen also keinerlei Differenzierung zwischen einer zu großen Entfernung und einer Unregelmäßigkeit in der Oberfläche, wie z.B. einer Spalte oder einer Kante, zu.

Aus der US-A-4 015 101, von der ausgehend der Oberbegriff des Anspruchs 1 gebildet ist, ist eine Abtast-Einrichtung bekannt, bei welcher mittels zweier Magnetspulen ein Magnetfeld in ein Werkstück induziert wird. Dabei wird der Magnetfluß einerseits über ein Joch und anderseits durch das Werkstück selbst geleitet. Der Abstand des Jochs vom Werkstück stellt also den variablen Luftspalt im magnetischen System dar.

Zusätzlich sind zwei separate Magnetfeld-Detektoren vorgesehen. Diese messen die magnetischen Teilfelder im Objekt. Dazu sind sie quer zur Wicklungsrichtung der Magnetspulen neben diesen jeweils auf einem eigenen Joch angebracht, dessen Arbeits-Luftspalt dem Werkstück zugewandt ist.

Diese Entgegenhaltung beschreibt eine konventionelle Abtastvorrichtung mit induktiver Magnetfeld-Messung. Es ist weder eine direkte induktive Kopplung zwischen Sender- und Empfänger-Spule noch ein kernloses Erreger-System vorgesehen.

Ersichtlicherweise ist die bekannte Abtasteinrichtung außerordentlich anfällig gegenüber Störspannungen und anderen externen Einflüßen auf das Objekt. Schwankungen in der elektrischen Leitfähigkeit des Objekts führen ebenso zu Meßfehlern wie z.B. Schwankungen der Materialstärke. Außerdem läßt sich die Gesamtanordnung nach außen nicht abschirmen, was in der Praxis zu unerwünschten, ggf. sogar den Einsatz der Vorrichtung verhindernden Störspannungs-Abstrahlungen führen kann. Dementsprechend wird die bekannte Anordnung auch durch einen Generator im Niederfrequenz-Bereich betrieben.

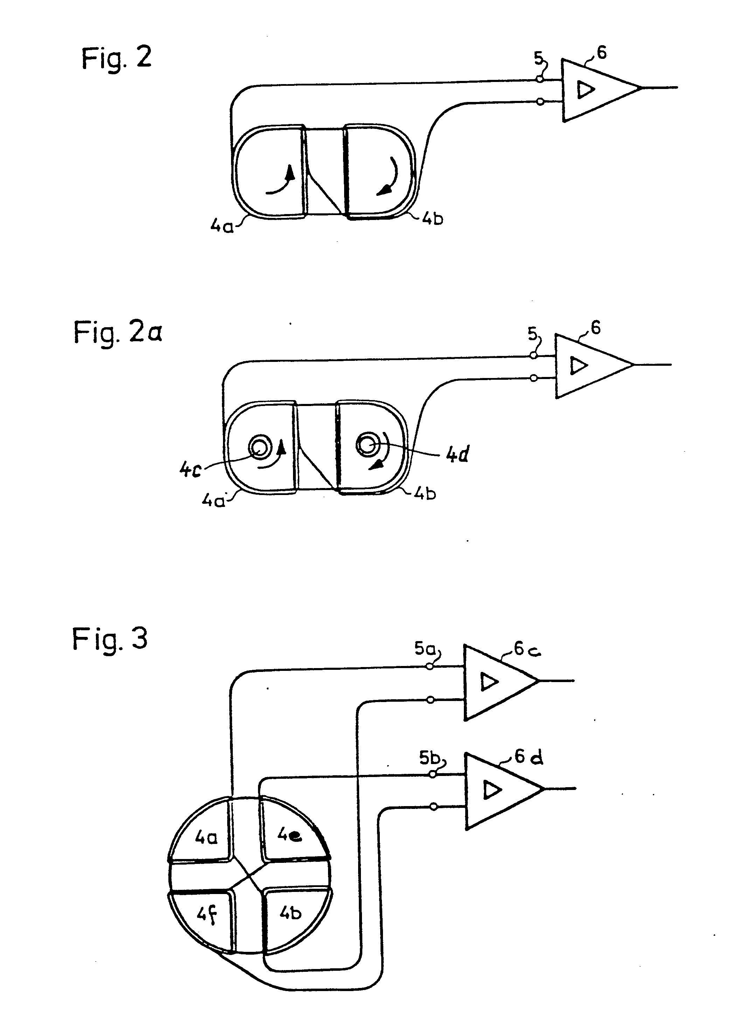

Die kapazitiven Elektroden zur kapazitiven Abstandsmessung erfordern noch zusätzlich einen HF-Generator sowie eine außerordentlich aufwendige Auswertungs-Einrichtung, wie dies vor allem aus Figur 2 dieser Entgegenhaltung ersichtlich ist. Die zugehörigen Beschreibungsteile offenbaren dabei, daß die Magnetfeld-Detektoren zur Abstandsmessung weder vorgesehen noch geeignet sind.

Aufgabe der Erfindung ist es also, die bekannten Meß- bzw. Sensoranordnungen zu verbessern, insbesondere bei einfachster, wirtschaftlicher Bauform genauere Signale zu erhalten und auch im Fall von Unregelmäßigkeiten, insbesondere Spalten im Objekt (oder zwischen zwei Objekten) verwertbare und vor allem differenzierte Meß-Signale zu gewährleisten.

Erfindungsgemäß wird dies bei einer Sensoranordnung gemäß dem Oberbegriff des Anspruchs 1 durch die in dessen kennzeichnendem Teil aufgeführten Merkmale gewährleistet.

Die beiden Hilfswicklungen ermitteln dabei mit hoher Genauigkeit den individuellen Abstand der zugeordneten Empfänger-Spulen zum Objekt. Dadurch lassen sich Abstandsunterschiede der Empfänger-Spulen und daraus resultierende Fehler ermitteln. Es hat sich nämlich gezeigt, daß bei einer Einstellung des Sensors, die vom 90° Winkel zur Werkstück-Oberfläche abweicht, ein Seitenfehler auftreten kann. Ähnliches tritt ein, wenn bei einem I-Stoß einer Schweißnaht die eine Kante des am I-Stoß getrennten Werkstücks näher zu einer Empfänger-Spule steht als die andere Kante zu einer anderen Empfänger-Spule (Kantenversatz). In diesen Fällen werden die einzelnen Empfänger-Spulen des Sensors nicht gleichmäßig vom Werkstück her beeinflußt, sondern die näher am Werkstück liegende Empfänger-Spule erfährt eine stärkere Beeinflussung. Hierdurch kann ein Fehlersignal erzeugt werden, dessen Höhe vom Verhältnis Durchmesser des Sensors zum Abstand zum Werkstück abhängig ist. Erfindungsgemäß werden solche Fehler ausgeschlossen.

Bei der Erfindung ist dabei eine direkte induktive Kopplung von Empfänger-Spulen und Sender-Spule ohne Magnetkern vorgesehen. Durch das Objekt beeinflußt wird also das ursprüngliche von der Sender-Spule erzeugte elektromagnetische Feld, welches auch die unmittelbar und induktiv gekoppelten Empfänger-Spulen und das Objekt erfaßt. Störspannungen wirken demnach regelmäßig auf das Gesamtfeld, sie wirken sich in beiden Empfänger-Spulen und auch in den Hilfswicklungen gleichmäßig aus und werden dementsprechend automatisch kompensiert.

Durch die Anordnung der Empfänger-Spulen und der Hilfswicklungen an der dem Objekt zugewandten Seite der Senderspule oder wenigstens teilweise innerhalb des durch die Sender-Spule begrenzten Toroids, d.h. der Mantelfläche der Sender-Spule, wird optimale Kopplung gewährleistet.

Bei der Sensoranordnung gemäß vorliegender Erfindung tritt durch Objektunregelmäßigkeiten auch eine Phasenverschiebung der Signale in den Empfänger-Spulen gegenüber den Signalen in der Sender-Spule auf, die ebenso eine Auswertung zuläßt, wie Amplituden-Schwankungen im Ausgangskreis der Empfänger-Spulen. Die Erfindung ermöglicht also eine direkte Meßwerterfassung im erzeugten elektromagnetischen Feld, vor allem mit den Vorteilen größerer Genauigkeit, geringerer Störanfälligkeit und trotzdem vereinfachter Bauform. Die Verwendung eines HF-Oszillators gewährleistet dabei besonders gute Kopplung und vermindert den Störeinfluß von externen Störspannungen mit meist niederer Frequenz.

Einfachster konstruktiver Aufbau und Kompensation von Störspannungseinflüssen lassen sich dabei mit der induktiven Sensoranordnung dadurch erreichen, daß die Wechselfelder von Sender-Spule, Empfänger-Spulen und Hilfswicklung aufgrund des geometrischen Aufbaus parallel verlaufen und sich unmittelbar, d.h. ohne Magnetkern und Fluß über das Werkstück, durchdringen.

Die Induktion in die Hilfswicklungen und in die Empfänger-Spulen wird durch Wirbelströme, welche durch die Sender-Spule in das Objekt induziert werden, beeinflußt.

Bei der Erfindung wird dabei also vom bekannten Prinzip der Beeinflußung einer frequenzbestimmenden Induktivität oder Kapazität abgegangen und stattdessen durch eine Sender-Spule ein Wechselfeld erzeugt, welches in Empfänger-Spulen und in den Hilfswicklungen eine Wechselspannung induziert. Durch das Objekt, z.B. das metallische Werkstück, wird bei Annäherung das Wechselfeld verändert. Dementsprechend wird auch die Induktion aus der Sender-Spule in die Empfänger-Spulen und in die Hilfswicklungen unmittelbar beeinflußt. Dadurch, daß die beiden Empfänger-Spulen sich bei einer Lageveränderung des Objekts unterschiedlich vom Objekt entfernen bzw. sich diesem nähern, ergibt sich eine unterschiedliche Feldverteilung der HF-Felder und eine Phasenverschiebung in den beiden Empfänger-Spulen. Durch Vergleich der Teilspannungen der beiden Empfänger-Spulen läßt sich dabei auf einfachste Weise die Lageveränderung des Objekts ermitteln. Am einfachsten kann dies dadurch erfolgen, daß die Empfänger-Spulen unmittelbar mit entgegengesetztem Wicklungssinn zusammengeschaltet sind, so daß sich die Teilspannungen der Empfänger-Spulen aufheben, sofern sie in gleicher Weise durch das Objekt beeinflußt werden. Ändert sich dagegen die Relativlage des Objekts, dann tritt eine unterschiedliche Beeinflussung der Empfänger-Spulen auf und ihre Spannungen kompensieren sich nur mehr teilweise, so daß ein verwertbares Ausgangssignal zur Verfügung steht. Da durch das Objekt eine Änderung der Feldverteilung der HF-Felder und auch eine Induktivitätsänderung bewirkt wird, resultiert aus der Lageveränderung auch eine unterschiedliche Induktivitätsänderung der Empfänger-Spulen, so daß eine Phasenänderung der Wechselspannung am Ausgang der Empfänger-Spulen verglichen mit dem Signal der Sender-Spule ermittelt werden kann. Diese Phasenänderung eignet sich in vielen Fällen wesentlich besser als eine Spannungsänderung zur Auswertung.

Die Sensoranordnung ist besonders empfindlich für Änderungen der seitlichen Relativlage, wenn die Empfänger-Spulen auf der dem Objekt zugewandten Seite der Sender-Spule angeordnet und/oder mit der Wicklungsachse zum Objekt hin gerichtet sind. Dadurch tritt nämlich in erster Linie eine Phasenverschiebung in den Empfänger-Spulen auf, die für das Ausgangssignal verwertbar ist, und nicht eine auf beide Empfänger-Spulen wirkende Dämpfung des Feldes der Sender-Spule.

Die vorstehend beschriebenen Phasenveränderungen der Signale der Empfänger-Spule sind auch ganz besonders ausgeprägt feststellbar, wenn auch die Sender-Spule gegensinnig gewickelte Teilspulen, d.h. eine bifilare Wicklung aufweist, wobei die beiden Teilspulen der bifilaren Wicklung in unterschiedlichem Abstand von den Empfänger-Spulen angeordnet sind. Die beiden Teilspulen der bifilaren Wicklung erzeugen nämlich jeweils ein entgegengerichtetes Wechselfeld, welches sich, gleicher Abstand von den Windungen vorausgesetzt, aufhebt. Durch den unterschiedlichen Abstand der Sender-Teilspulen von den Empfänger-Spulen tritt jedoch keine vollständige Feldkompensation auf. Wird eine der beiden Sender-Teilspulen stärker gedämpft und zusätzlich noch in der Induktivität verändert, so resultiert daraus ein Überwiegen der Spannung und Phase der anderen Sender-Teilspule, wodurch eine starke und gut meßbare Phasenänderung am Ausgang der Empfänger-Spulen ermittelbar ist.

Statt einer sozusagen unmittelbaren Kompensation der beiden Ausgangssignale der Empfänger-Spulen durch Gegeneinanderschalten im umgekehrten Windungssinn kann selbstverständlich auch jede der Spulen separat an eine Auswertungsschaltung, z.B. einen Verstärker, angeschlossen werden und sodann können die verstärkten Signale verarbeitet, z.B. also miteinander verglichen werden. Dabei läßt sich dann in bekannter Weise auch gleichzeitig Dämpfung durch Annäherung und Phasenverschiebung durch Seitenversatz in bezug auf die Objekt- oder Werkstück-Unregelmäßigkeit separat ermitteln und auswerten.

Zum Abtasten von Objektunregelmäßigkeiten, wie z.B. Spalten, ggf. auch zur eigentlichen Messung der Breite derartiger Spalten oder anderer Objektunregelmäßigkeiten hat es sich besonders bewährt, wenn die Empfänger-Spulen mit ihren Mittel-Längsachsen senkrecht zum Objekt gerichtet zu beiden Seiten der Objektunregelmäßigkeit angeordnet sind.

Sofern die Relativlage der Empfänger-Spulen zu einem punktförmigen Objekt, z.B. auch einem Loch im Objekt, ermittelt werden soll, kann eine geradzahlige Mehrzahl von Empfänger-Spulen vorgesehen werden, die jeweils paarweise, in der Regel mit den Hilfswicklungen, zusammengeschaltet werden. Auf diese Weise sind durch entsprechenden Vergleich Lageveränderungen des Objekts in praktisch jede beliebige Richtung ermittelbar. Besonders vorteilhaft läßt sich dies erreichen, wenn die Empfänger-Spulen im Querschnitt etwa kreissegmentartig ausgebildet sind.

Durch die Anordnung der zusätzlichen Hilfswicklungen läßt sich erfindungsgemäß der Abstand jeder der Empfänger-Spule vom Objekt ermitteln. Sofern unterschiedliche Abstände und unterschiedliche Beeinflussung der Empfänger-Spulen, d.h. also eine asymmetrische Überlagerung der durch die Objektunregelmäßigkeiten bewirkten Beeinflussung festgestellt wird, kann Kompensation des eventuell bewirkten Fehlers erreicht werden.

Die Erfindung ist im folgenden in Ausführungsbeispielen anhand der Zeichnungen näher erläutert. Es zeigen:

Fig. 1 die schematische Darstellung einer induktiven Sensoranordnung in Seitenansicht,

Fig. 1a die Sensoranordnung gemäß Fig. 1 mit zwei Hilfswicklungen, d.h. eine erfindungsgemäße Sensoranordnung,

Fig. 2 die Sensoranordnung gemäß Fig. 1 von unten,

Fig. 2a die Sensoranordnung gemäß Fig. 1a von unten, und

Fig. 3 ein weiter abgewandeltes Ausführungsbeispiel, mit vier Empfänger-Spulen.

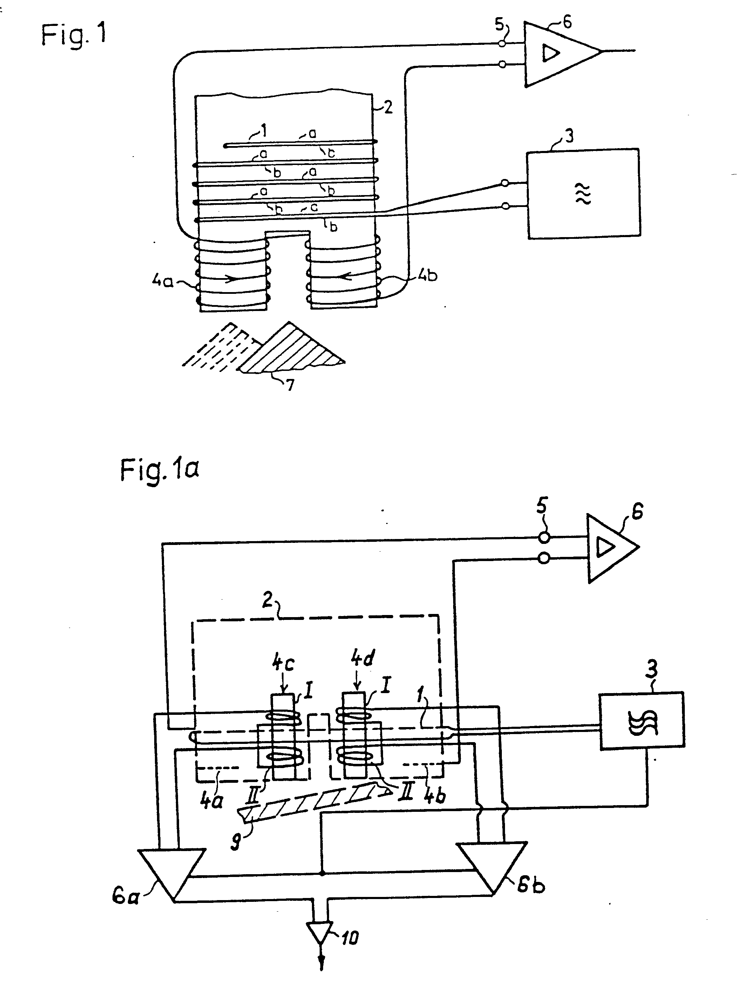

Gemäß Fig. 1 ist eine Sender-Spule 1 mit zwei Sender-Teilspulen a, b auf einem Keramik-Spulenträger 2 angeordnet und mit einem Hochfrequenz-Oszillator 3 verbunden. Durch die entgegengerichtete Wicklungsanordnung der Teilspulen a, b der Sender-Spule 1 wird durch diese kein Hochfrequenz-Störsignal abgegeben, da die jeweils entgegengerichteten Felder der gegensinnigen Windungsabschnitte a und b sich kompensieren. In bezug auf die Empfänger-Spulen 4a, 4b ist jedoch der Abstand der Teilspule a größer als der Abstand der Teilspule b der Sender-Spule 1. Damit überwiegt im Hinblick auf die Induktion in den Empfänger-Spulen 4a und 4b das Feld der Teilspule b, so daß in die Empfänger-Spulen 4a und 4b eine Wechselspannung induziert wird.

Wie auch aus Fig. 2 ersichtlich ist, sind jedoch die Empfänger-Spulen 4a und 4b ihrerseits wiederum gegensinnig gewickelt und weisen die gleiche Windungszahl auf, so daß sich die Teilspannungen in den Empfänger-Spulen 4a und 4b kompensieren und am Eingang 5 eines Verstärkers 6 kein Signal anliegt, solange die Empfänger-Spulen 4a und 4b nicht in ihrer bestehenden Symmetrie gestört werden. Unter den Empfänger-Spulen 4a und 4b ist symmetrisch fluchtend zur Gesamtanordnung ein Objekt 7 schematisch dargestellt. In der Darstellung ist das Objekt 7 ebenfalls absolut symmetrisch bezüglich der Empfänger-Spulen 4a und 4b, so daß die vom metallischen Objekt 7 ausgehende Induktivitätsbeeinflussung in beiden Empfänger-Spulen 4a und 4b gleich wirkt und das Signal am Ausgang dementsprechend kompensiert wird. Verändert sich jedoch die Relativlage des Objekts 7 in der gestrichelt angedeuteten Weise, wird ersichtlicherweise die Empfänger-Spule 4a wesentlich stärker beeinflußt, was eine Veränderung der Induktivität und der Phasenlage in der Empfänger-Spule 4a zur Folge hat. Dementsprechend entspricht die Teilspannung a in der Empfänger-Spule 4a nicht mehr der Teilspannung a in der Empfänger-Spule 4b, wobei die Veränderung sowohl den Spannungswert als auch die Phasenlage betrifft. Am Eingang 5 des Verstärkers 6 erscheint dementsprechend ein Signal, welches in der Amplitude und der Phasenlage der Veränderung der Relativlage des Objekts 7 in die gestrichelte Position entspricht. Die Auswertung dieses Signals, z.B. zur Auslösung eines Warnsignals oder zur Auswertung und Darstellung eines der Abweichung entsprechenden Signals oder auch zur Aktivierung einer Nachführsteuerung, ist nicht Gegenstand dieser Erfindung und bedarf hier keiner näheren Erläuterung.

Die Fig. 1a und 2a zeigen einen erfindungsgemäßen Sensor, d.h. einen Sensor gemäß Fig. 1 oder 2, bei denen in die Empfänger-Spule 4a eine Hilfswicklung 4c und in die Empfänger-Spule 4b eine Hilfswicklung 4d eingebracht ist.

Beide Hilfswicklungen sind beim Ausführungsbeispiel mit je zwei Spulen I und II versehen, die in Fig. 2a in der Tiefe hintereinander gestaffelt angeordnet sind. Dies gibt Fig. 1a näher an (Seitenansicht). Der Spulenträger 2 des Sensors ist gestrichelt gezeichnet. Die Hilfswicklung 4c besteht aus zwei Teil-Spulen I und II, die gegeneinander geschaltet sind, so daß sich bei richtiger Justierung zur Sender-Spule 1 die Spannungen in beiden Teil-Spulen aufheben. Am Ausgang des Verstärkers 6a tritt dann keine Spannung auf.

In gleicher Weise sind in der rechten Hilfswicklung 4d des Sensors die beiden Spulen I und II auf einem Spulenträger 2 angeordnet und ebenfalls so abgeglichen, daß im Normalzustand beide Spulen-Spannungen sich gegenseitig kompensieren und somit am Ausgang des Verstärkers 6b keine Spannung auftritt. Der Verstärker 6a und der Verstärker 6b sind im Referenzeingang mit dem HF-Oszillator 3 verbunden. Dadurch können Ausgangssignale der Verstärker 6a, 6b, die sich in ihrer Phase gegenüber dem Originalsignal des HF-Oszillators 3 unterscheiden, in eine positive oder negative Gleichspannung umgewandelt werden.

Bei schräg liegendem Objekt 9 (Fig. 1a) wird die Hilfswicklung 4d stärker beeinflußt als die Hilfswicklung 4c. Andererseits wird sie nicht so stark seitenabhängig beeinflußt wie die Empfänger-Spule 4d im rechten Teil des Hauptsensors, da sie weiter zum Zentrum hin liegt. Die Aufgabe der Hilfswicklung 4d ist in diesem Fall, ein Korrektursignal zu erzeugen, das mit dem von der Hilfswicklung 4c erzeugten Signal verglichen werden kann. Dies wird dadurch realisiert, daß die Spannungen aus den Verstärkern 6a und 6b einem Differenzverstärker 10 zugeführt werden, welcher ein Differenzsignal in Abhängigkeit von der Schräglage des Objekts 9 abgibt. Dieses Differenzsignal wird dann verwendet, um den Fehler des Hauptsignals aus den Empfänger-Spulen 4a und 4b des Sensors zu kompensieren.

Im folgenden Ausführungsbeispiel werden keine Hilfssensoren dargestellt, um die Funktion der beschriebenen Empfänger-Spulen, die selbstverständlich auch mit Hilfssensoren ausgebildet werden, vereinfacht darstellen zu können.

Fig. 3 zeigt ein abgewandeltes Ausführungsbeispiel einer Empfänger-Spulen-Anordnung gemäß Fig. 1. Dabei sind vier Empfänger-Spulen 4a, 4b und 4e, 4f vorgesehen, die kreuzweise gegeneinander geschaltet sind. Solange sich ein Objekt genau in der Mitte unter den vier Empfänger-Spulen 4a, 4b und 4e, 4f befindet, ist das System ausgeglichen, und es erscheint keine Spannung. Tritt jedoch eine Unsymmetrie auf, d.h. verändert sich die Relativlage des Objekts in bezug auf die vier Empfänger-Spulen 4a, 4b und 4e, 4f, treten an den Eingängen 5a und 5b der Verstärker 6c und 6d der Abweichung proportionale Eingangssignale auf, aus welchen sich die Richtung der Abweichung sowie der Grad der Abweichung ermitteln läßt.

**Patentansprüche**

1. Induktive Sensoranordnung, mit einer von einem Oszillator (3) mit Wechselstrom gespeisten Sender-Spule (1) und wenigstens zwei Empfänger-Spulen (4a, 4b; 4e, 4f) zur Ermittlung der Relativlage des Sensors in bezug auf wenigstens ein metallisches Objekt (7; 9) mit unregelmäßiger, z.B. durch einen Spalt unterbrochener Oberfläche, insbesondere zum Ermitteln der Relativlage eines Werkzeugs zu einem Werkstück, wobei durch die Senderspule (1) ein von der jeweiligen Relativlage des Objekts abhängiger Wechselstrom in die Empfänger-Spulen induziert wird, wobei Sender-Spule und Empfänger-Spulen miteinander gekoppelt sind, wobei die Spulenachse der Sender-Spule (1) zum Objekt hin gerichtet ist und wobei die Feldverteilung des Wechselfeldes der Sender-Spule und damit die Amplitude oder die Amplitude und die Phase der in die Empfänger-Spulen induzierten Spannung durch Wirbelströme, welche durch die Sender-Spule in das Objekt induziert werden, oder durch solche Wirbelströme und durch Dämpfung durch das Objekt beeinflußbar sind, wobei weiterhin die Empfänger-Spulen (4a, 4b; 4e, 4f) ausgangsseitig direkt oder indirekt so zusammengeschaltet sind, daß sich die Teilspannungen der Empfänger-Spulen wenigstens teilweise aufheben, und wobei ferner jeweils einer Empfänger-Spule ein Hilfssensor zur Ermittlung des jeweiligen Relativabstands der Empfänger-Spule zum Objekt zugeordnet ist, dadurch gekennzeichnet, daß der Oszillator (3) im HF-Bereich arbeitet, daß als Hilfssensor jeweils wenigstens eine Hilfswicklung (4c, 4d) vorgesehen ist, daß die Empfänger-Spulen (4a, 4b; 4e, 4f) symmetrisch zur Mittel-Längsachse der Sender-Spule und in dem von der Sender-Spule erzeugten Feld nebeneinander liegen und zusammen mit den Hilfswicklungen (4c, 4d) mit der Sender-Spule (1) magnetkernlos gekoppelt sind, daß die Spulenachsen der Empfänger-Spulen (4a, 4b; 4e, 4f) und der Hilfswicklungen (4c, 4d) zum Objekt hin gerichtet sind, und daß die Empfänger-Spulen und die Hilfswicklungen an der dem Objekt zugewandten Seite der Sender-Spule (1) zwischen Sender-Spule und Objekt (7; 9) oder wenigstens teilweise innerhalb des durch die Sender-Spule begrenzten Toroids angeordnet sind.

2. Induktive Sensoranordnung nach Anspruch 1, dadurch gekennzeichnet, daß die Sender-Spule (1) aus zwei nicht miteinander verdrillten Drähten bifilar gewickelt ist, und somit zwei gegensinnig gewickelte Teilspulen (a, b) aufweist.

3. Induktive Sensoranordnung nach einem der vorangehenden Ansprüche, dadurch gekennzeichnet, daß die Wicklungsachsen der Hilfswicklungen (4c, 4d) etwa parallel zu den Wicklungsachsen der Empfänger-Spulen (4a, 4b) verlaufen.

4. Induktive Sensoranordnung nach einem der vorangehenden Ansprüche, dadurch gekennzeichnet, daß die Empfänger-Spulen (4a, 4b; 4e, 4f) derart gegensinnig im elektromagnetischen Feld der Sender-Spule (1) angeordnet sind, daß Ströme mit entgegengerichteter Phasenlage in sie induzierbar sind.

5. Induktive Sensoranordnung nach Anspruch 4, dadurch gekennzeichnet, daß die Empfänger-Spulen (4a, 4b; 4e, 4f) direkt gegeneinander geschaltet sind.

6. Induktive Sensoranordnung nach einem der vorangehenden Ansprüche, dadurch gekennzeichnet, daß die Hilfwicklungen (4c, 4d) derart gegensinnig im elektromagnetischen Feld der Sender-Spule (1) angeordnet sind, daß Ströme mit entgegengerichteter Phasenlage in sie induzierbar sind.

7. Induktive Sensoranordnung nach Anspruch 6, dadurch gekennzeichnet, daß jede Hilfswicklung (4c bzw. 4d) aus zwei gegeneinander geschalteten Spulen (I, II) besteht.

8. Induktive Sensoranordnung nach einem der vorangehenden Ansprüche, dadurch gekennzeichnet, daß die Sender-Spule (1) die Empfänger-Spulen (4a, 4b) umgibt.

9. Induktive Sensoranordnung nach einem der vorangehenden Ansprüche, dadurch gekennzeichnet, daß jeweils eine Empfänger-Spule (4a oder 4b) die zugeordnete Hilfswicklung (4c bzw. 4d) umgibt.

10. Meßanordnung zum Ermitteln der Relativbewegung einer Sensoranordnung in bezug auf ein metallisches Objekt (7, 9) mit unregelmäßiger, insbesondere durch einen Spalt oder eine Kante unterbrochener Oberfläche, wobei eine Sensoranordnung nach einem der vorangehenden Ansprüche eingesetzt ist, dadurch gekennzeichnet, daß eine Sender-Spule (1) mit wenigstens zwei Empfänger-Spulen (4a, 4b; 4e, 4f) zur Ermittlung der Relativlage in bezug auf die Objektunregelmäßigkeit vorgesehen ist, daß wenigstens zwei Hilfswicklungen (4c, 4d) zur Ermittlung des Abstands der einzelnen Empfänger-Spulen von der Oberfläche des Objekts (7, 9) vorgesehen sind, daß wenigstens die Hilfswicklungen an eine Kompensationsanordnung (6a, 6b, 10) angeschlossen sind, durch welche die von den Empfänger-Spulen ermittelten Relativlage-Meßwerte korrigierbar sind, sofern die jeweiligen Abstände der beiden Empfänger-Spulen zum Objekt (7, 9) voneinander abweichen.

11. Meßanordnung nach Anspruch 10, dadurch gekennzeichnet, daß die Kompensationsanordnung wenigstens einen Differenzverstärker (10) zur Verstärkung der Differenzsignale gegensinnig geschalteter Hilfswicklungen (4c, 4d) enthält.

**Claims**

1. An inductive sensor device, with an emitter coil (1) supplied with alternating current from an oscillator (3) and at least two receptor coils (4a, 4b; 4e, 4f) for determining the relative position of the sensor relative to at least one metal object (7; 9) with an irregular surface, e.g. interrupted by a gap, in particular for determining the relative position of a tool to a workpiece, wherein the emittter coil (1) induces in the receptor coils an alternating current dependent on the respective relative position of the object, wherein the emitter coil and receptor coils are coupled together, wherein the coil axis of the emitter coil (1) is aligned with the object and the field distribution of the alternating field of the emitter coil and hence the amplitude or the amplitude and the phase of the voltage induced in the receptor coils can be influenced by eddy currents induced in the object by the emitter coil, or can be influenced by such eddy currents and damping by the object, wherein furthermore the outputs of the receptor coils (4a, 4b; 4e, 4f) are directly or indirectly so connected together that the partial voltages of the receptor coils compensate each other at least partially, and wherein also each receptor coil is associated with an auxiliary sensor for determining the respective relative distance of the receptor coil from the object, characterised in that the oscillator (3) operates in the high frequency range, in that at least one auxiliary winding (4c, 4d) is provided in each case as an auxiliary sensor, in that the receptor coils (4a, 4b; 4e, 4f) lie adjacent to one another symmetrically to the central longitudinal axis of the emitter coil and in the field generated by the emitter coil and in the field generated by the emitter coil and, together with the auxiliary windings (4c, 4d), are coupled without a magnetic core to the emitter coil (1), in that the coil axes of the receptor coils (4a, 4b; 4e, 4f) and the auxiliary windings (4c, 4d) are aligned with the object, and in that the receptor coils and the auxiliary windings are disposed on the side of the emitter coil (1) facing the object between the emitter coil and the object (7; 9) or at least partly inside the toroid defined by the emitter coil.

2. An inductive sensor device according to claim 1, characterised in that the emitter coil (1) is wound in a bifilary manner from two wires which are not twisted together, and thus has two partial coils (a, b) wound in opposite directions.

3. An inductive sensor device according to one of the preceding claims, characterised in that the winding axes of the auxiliary windings (4c, 4d) run approximately parallel to the winding axes of the receptor coils (4a, 4b).

4. An inductive sensor device according to one of the preceding claims, characterised in that the receptor coils (4a, 4b; 4e, 4f) are arranged in opposite directions in the electromagnetic field of the emitter coil (1) in such a manner that currents with opposite phase positions may be induced in them.

5. An inductive sensor device according to claim 4, characterised in that the receptor coils (4a, 4b; 4e, 4f) are connected directly in opposition.

6. An inductive sensor device according to one of the preceding claims, characterised in that the auxiliary windings (4c, 4d) are arranged in opposite directions in the electromagnetic field of the emitter coil (1) in such a manner that currents with opposite phase positions may be induced in them.

7. An inductive sensor device according to claim 6, characterised in that each auxiliary winding (4c, 4d) consists of two coils (I, II) connected in opposition.

8. An inductive sensor device according to one of the previous claims, characterised in that the emitter coil (1) surrounds the receptor coils (4a, 4b).

9. An inductive sensor device according to one of the previous claims, characterised in that one receptor coil (4a or 4b) respectively surrounds the associated auxiliary winding (4c or 4d).

10. A measuring device for determining the relative position of a sensor device relative to a metal object (7, 9) with an irregular surface, in particular interrupted by a gap or an edge, wherein a sensor device according to one of the previous claims is used, characterised in that an emitter coil (1) with at least two receptor coils (4a, 4b; 4e, 4f) is provided for determining the relative position relative to the irregularity of the object, in that at least two auxiliary windings (4c, 4d) are provided for determining the distance of the individual receptor coils from the surface of the object (7, 9), in that at least the auxiliary windings are connected to a compensating device (6a, 6b, 10), by means of which the relative position measurements determined by the receptor coils may be corrected if the respective distances of the two receptor coils from the object (7, 9) differ from one another.

11. A measuring device according to claim 10, characterised in that the compensating device comprises at least one differential amplifier (10) for amplifying the differential signals of auxiliary windings (4c, 4d) connected in opposition.

## Revendications

1. Dispositif inductif de détection muni d'une bobine d'émission (1) alimentée en courant alternatif par un oscillateur (3) et d'au moins deux bobines de réception (4a, 4b; 4e, 4f), pour déterminer la position relative du détecteur par rapport à au moins un objet métallique (7; 9) présentant une surface irrégulière, par exemple interrompu par une fissure, et notamment pour déterminer la position relative d'un outil par rapport à une pièce à usiner, dans lequel un courant alternatif dépendant de la position relative respective de l'objet est induit dans les bobines de réception par la bobine d'émission (1), et dans lequel la bobine d'émission et bobines de réception sont couplées, les unes aux autres, l'axe de la bobine d'émission (1) étant dirigé vers l'objet tandis que la répartition du champ alternatif de la bobine d'émission et donc l'amplitude ou l'amplitude et la phase de la tension induite dans les bobines de réception peuvent être influencées par des courants de Foucault induits dans l'objet par la bobine d'émission, ou par de tels courants de Foucault et par l'amortissement produit à travers l'objet, les bobines de réception (4a, 4b; 4e, 4f) étant en outre interconnectées du côté de la sortie, directement ou indirectement, de telle sorte que les tensions partielles des bobines de réception se compensent au moins en partie, tandis qu'un détecteur auxiliaire est affecté à chaque bobine de réception afin de déterminer la distance relative correspondante entre la bobine de réception et l'objet, caractérisé en ce que l'oscillateur (3) fonctionne dans la plage HF., en ce qu'au moins un enroulement auxiliaire (4c, 4d) est prévu à chaque fois comme détecteur auxiliaire, en ce que les bobines de réception (4a, 4b; 4e, 4f) sont placées symétriquement par rapport à l'axe longitudinal central de la bobine d'émission et l'une près de l'autre dans le champ produit par la bobine d'émission, et avec les enroulements auxiliaires (4c, 4d), sont couplées sans noyau magnétique à la bobine d'émission (1), en ce que les axes des bobines de réception (4a, 4b; 4e, 4f) et des enroulements auxiliaires (4c, 4d) sont dirigés vers l'objet, et en ce que les bobines de réception et les enroulements auxiliaires sont placés sur le côté de la bobine d'émission (1) tourné vers l'objet entre la bobine d'émission et l'objet (7; 9), ou au moins en partie à l'intérieur du toroïde limité par la bobine d'admission.

2. Dispositif inductif de détection selon la revendication 1, caractérisé en ce que la bobine d'émission (1) est réalisée par enroulement bifilaire à partir de deux fils qui ne sont pas torsadés ensemble et en ce qu'elle présente ainsi deux bobines élémentaires (a, b) à enroulements de sens inverses.

3. Dispositif inductif de détection selon l'une des revendications précédentes, caractérisé en ce que les axes d'enroulement des enroulements auxiliaires (4c, 4d) sont sensiblement parallèles aux axes d'enroulement des bobines de réception (4a, 4b).

4. Dispositif inductif de détection selon l'une des revendications précédentes, caractérisé en ce que les bobines de réception (4a, 4b; 4e, 4f) sont placées en sens inverse dans le champ éléctromagnétique de la bobine d'émission (1) de telle sorte que des courants en relation de phases opposées puissent y être induits.

5. Dispositif inductif de détection selon la revendication 4, caractérisé en ce que les bobines de réception (4a, 4b; 4e, 4f) sont connectées directement en opposition.

6. Dispositif inductif de détection selon l'une des revendications précédentes, caractérisé en ce que les enroulements auxiliaires (4c, 4d) sont placés en sens inverse dans le champ électromagnétique de la bobine d'émission (1) de telle sorte que des courants en relation de phases opposées puissent y être induits.

7. Dispositif inductif de détection selon la revendication 6, caractérisé en ce que chaque enroulement auxiliaire (4c ou 4d) est composé de deux bobines (I, II) connectées en opposition.

8. Dispositif inductif de détection selon l'une des revendications précédentes, caractérisé en ce que la bobine d'émission (1) entoure les bobines de réception (4a, 4b).

9. Dispositif inductif de détection selon l'une des revendications précédentes, caractérisé en ce que chaque bobine de réception (4a ou 4b) entoure l'enroulement auxiliaire associé (4c ou 4d).

10. Dispositif de mesure destiné é déterminer la position relative d'un dispositif de détection par rapport à un objet métallique (7, 9), qui présente une surface irrégulière, en particulier interrompue par une fissure ou une arête, et dans lequel un dispositif de détection selon l'une des revendications précédentes est intégré, caractérisé en ce qu'une bobine d'émission (1) munie d'au moins deux bobines de réception (4a, 4b; 4e, 4f) est prévue pour déterminer la position relative par rapport à l'irrégularité de l'objet, en ce qu'au moins deux enroulements auxiliaires (4c, 4d) sont prévus pour déterminer la distance entre les différentes bobines de réception et la surface de l'objet (7, 9), et en ve qu'au moins les enroulements auxiliaires sont reliés à un dispositif de compensation (6a, 6b, 10) permettant de corriger les valeurs de mesure de position relative déterminées par les bobines de réception si les distances respectives entre les deux bobines de réception et l'objet (7, 9) diffèrent l'un de l'autre.

11. Dispositif de mesure selon la revendication 10, caractérisé en ce que le dispositif de compensation contient au moins un amplificateur différenciateur (10) destiné à amplifier les signaux différentiels d'enroulements auxiliaires (4c, 4d) connectés en sens inverse.

Fig. 1

Fig. 1a

**Fig. 2**

**Fig. 2a**

**Fig. 3**